# EUROPEAN PATENT APPLICATION

(11) **EP 0 627 686 A1**
(43) Date of publication of application: **07.12.1994**
(21) Application number: 94108323.0
(22) Date of filing: 30.05.1994
(51) Int. Cl.: G06F 12/06, H04L 12/24

(54) **System management information setting unit**

(30) Priority: 31.05.1993 JP 129097/93
(71) Applicant: MATSUSHITA ELECTRIC INDUSTRIAL CO., LTD., Kadoma-shi, Osaka-fu, 571 (JP)
(72) Inventor: Akiyoshi, Takashi, Sakai-shi, Osaka 588 (JP)
(74) Representative: Grünecker, Kinkeldey, Stockmair & Schwanhäusser Anwaltssozietät

(57) **Abstract**

address setting determination unit which determines whether setting of network address is made or not in client computer , the network address being given to each computer for connecting computer system to the network; host name input unit which enters host name being to be registered in pairs with the network address when such network address has not been set; address requesting unit which requests network address by sending host name to server computer storing network addresses in pairs with the host names for entire network; address information setting unit which sets the network address sent from the server computer and the host name entered by said host name input unit ; are provided.

## Description

### BACKGROUND OF THE INVENTION

### 1. Field of the Invention

The present invention relates to a system administration such as a computer system which is designed to operate in a network environment.

### 2. Description of the Prior Art

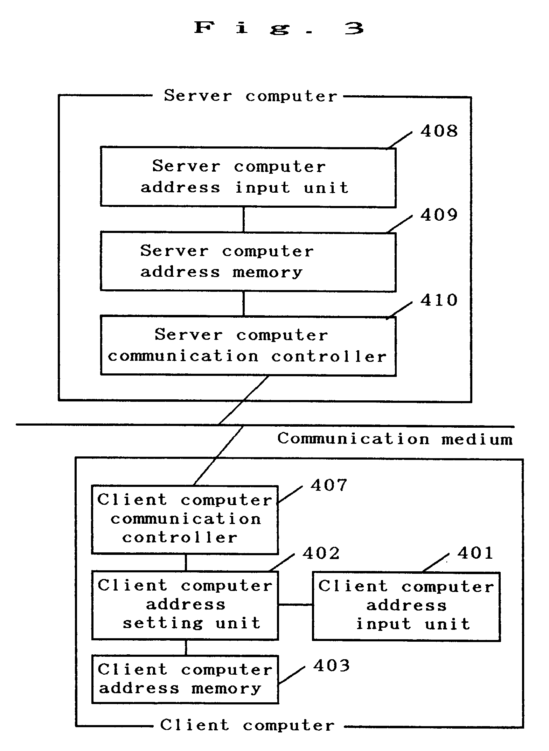

Fig. 3 is a block diagram illustrating a system management information setting unit of a computer system which performs communication between computers through a conventional communication medium: 401 is a client computer address input unit which enters the network address(internet address) of a client computer , that is necessary for performing communication with other computer such as a server computer or the like by connecting the computer system to the network by means of a communication medium; 402 is a client computer address setting unit which sets the network address(internet address) entered by the client computer address input unit 401 in the computer; 403 is a client computer address memory which stores the network address entered by the client computer address input unit 401; 407 is a client computer communication controller which controls communication with the sever computer through the communication medium; 408 is a server computer address input unit which enters the network address(internet address) being set in the client computer into the server computer for communicating with the client computer connected newly to the network through a communication medium; 409 is a server computer address memory which stores the network address entered by the server computer address input unit 408; and 410 is a server computer communication controller which controls communication with the client computer connected to the network through the communication medium.

The flow of operations of the system management information setting unit of the conventional computer system constructed as described above is described below. To connect a client computer anew to the communication medium, the user of the client computer enters the network address, such as an IP address or the like, using the client computer address input unit 401. The network address entered by the client computer address input unit 401 is set in the client computer by the client computer address setting unit, and stored in the client computer address memory 403. To communicate with the client computer which was newly connected to the communication medium, the administrator of the server computer also enters the network address, such as the IP address or the like set in the client computer, by using the server computer address input unit 408. Information entered by the server computer address input unit 408 is set in the computer by means of the server computer address memory 409, and stored in the server computer address memory 409. Based on the network address which is set in the client computer and the server computer, communication takes place between the client computer controller 407 and the server computer communication controller 410 through the network.

With the construction as described above, however, the administrator of the server computer also has to set the address set by the user of the client computer. Furthermore, it is conceivable that the user of the client computer may not have sufficient knowledge about setting a computer network and others, he may commit an input error when entering the network address comprising simple enumeration of numerals. In addition, the administrator of the server computer as well as the user of the client computer may execute a different setting erroneously, and this may cause a serious hindrance to the network. The user of the client computer may not be familiar with the various system management operations of the computer, and could require a lot of time for these operations. It is moreover necessary to carry out management operations of the server computer every time a new client computer is connected to the network.

### SUMMARY OF THE INVENTION

In view of the circumstances as mentioned above, invention 1 has an object to provide an address acquisition apparatus which, when a client computer is connected to a network anew, inquires the network address of the client computer to the server computer managing the network addresses of the entire network, and acquires the network address of the client computer from the server computer.

In view of these circumstances, invention 2 has an object to provide an address distributing apparatus wherein the server computer which manages network address of the entire network generates a network address anew in response to a distribution request from the client computer newly connected to the network, network addresses and host names are stored in pairs in a memory which stores network addresses of the entire network, and distributes the network addresses to client computers.

An address acquiring apparatus of the present invention 1 comprises:
an address setting determination unit which determines whether setting of a network address is made or not in a client computer , the network address being an identifier on an network and being given to each computer for connecting a computer system to the network;
a host name input unit which enters a host name which is an identifier for making it easy for a person to identify the computer , the host name being registered in pairs with the network address , when said address setting determination unit has determined that such network address has not been set;
an address requesting unit which requests a network address by sending the host name entered by said host name input unit to a server computer storing network addresses in pairs with the host names for an entire network;
an address receiving unit which determines and receives a response of the network address from the server computer;
an address information setting unit which sets the network address received by said address receiving unit and the host name entered by said host name input unit in the computer system; and
an address information memory which stores the network address in pairs with the host name set by said address information setting unit.

An address distributing apparatus of the present invention 2 comprises:
an address acquisition request receiving unit which receives a request for acquiring the network address sent from an address requesting unit which requests a network address by sending a host name to a server computer storing network addresses in pairs with the host names for an entire network;
an address range specifying unit which specifies a range of automatic allocation of the network addresses in the server computer;
an address generating unit which automatically generates the network address within the range specified by said address range specifying unit in accordance with information received by said address acquisition request receiving unit;
an address information memory which stores the network address generated by said address generating unit in pairs with the host name received by said address acquisition request receiving unit , in the server computer which manages network addresses of the entire network; and
an address sending unit which takes out the network address automatically generated by said address generating unit and transmits the network address to a client computer.

With the construction as described above, the invention 1 requests the network address of the client computer to the server computer when connecting a client computer to the network anew, sets the received network address,and causes the client computer address memory to store the same.

With the construction as mentioned above, the invention 2 manages network addresses of client computers by means of the server computer, and automatically distributes the network addresses to the client computers in response to the request from the client computer.

According to the invention 1 , as described above, it is possible, when connecting a client computer to the network anew, to inquire about the network address of the client computer to the server computer which manages network addresses of the entire network, and to automatically acquire the network address of the client computer from the server computer.

According to the invention 2, it become possible to automatically respond to the distribution request of network addresses from a client computer by automatically generating and registering a network address for a client computer to be connected to the network anew , in the server computer which manages network addresses of the entire network.

### BRIEF DESCRIPTION OF THE DRAWINGS

Fig. 1 is a block diagram illustrating the system management information setting apparatus of an embodiment of the present invention;
Fig. 2 is a flow chart illustrating the flow of processing of the system management information setting apparatus; and
Fig. 3 is a block diagram illustrating the conventional system management information setting apparatus.

### DESCRIPTION OF THE PREFERRED EMBODIMENTS

Now, the present invention is described in further detail with reference to the drawings.

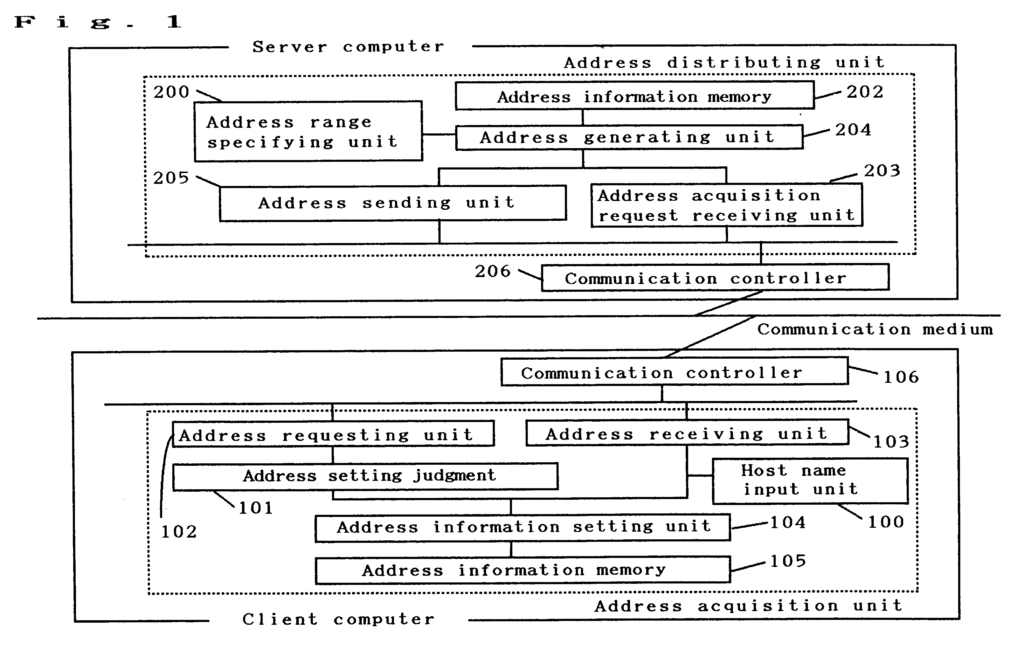

Fig. 1 is a block diagram illustrating the system management information setting apparatus of an embodiment of the present invention. In Fig. 1 , 101 is an address setting determination unit to determine whether or not setting is made in the client computer of a network address which is necessary for connecting a computer system to the network using a communication medium; 100 is a host name input unit to enter a host name which is an identifier for making it easy for a person to identify the computer and which is to be registered in pairs with the network address, when the network address is determined by the address setting determination unit 101, as not having been set; 102 is an address requesting unit which requests a network address to the server computer storing the host name entered by the host name input unit 100 in pairs with the network addresses for the entire network; 103 is an address receiving unit which determines and receives a response of the network address from the server computer; 104 is an address information setting unit which sets the network address received by the address receiving unit 103 in the computer system; 105 is an address information memory which stores a network address set by the address setting unit 104; 106 is a communication controller which controls communication with the server computer through a communication medium; 200 is an address range specifying unit which specifies a range of automatic allocation of the network addresses to the client computers; 203 is an address acquisition request receiving unit which receives a request for acquisition of a network address sent from the address requesting unit 102; 204 is an address generating unit which automatically generates a network address within a range specified by the address range specifying unit 200 in accordance with information received from the address acquisition request receiving unit 203; 202 is an address information memory which causes the server computer managing network addresses of the entire network to store the network address generated by the address generating unit 204 in pairs with the host name received by the address acquisition request receiving unit 203; 205 is an address sending unit which takes out the network address generated by the address generating unit 204 and sends the data to the client computer; and 206 is a communication controller which controls communication with the client computer through the network.

Referring to the system management information setting unit of this embodiment constructed as described above, its operations are now explained below.

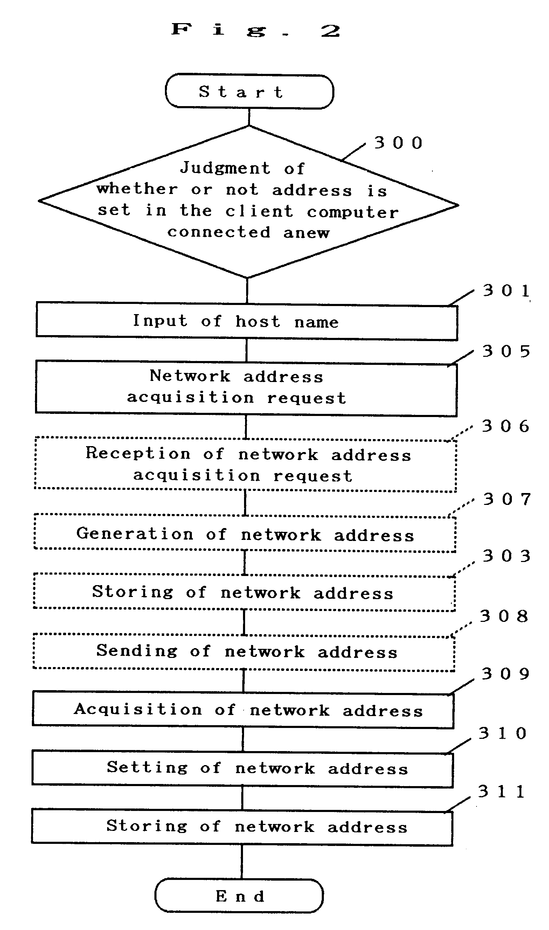

Operations of the system management information setting unit in the present embodiment are described with reference to the flow chart shown in Fig. 2. To facilitate illustration, functions of the server computer are enclosed by dotted lines and those of the client computer are shown in solid line boxes. At 300, the address setting determination unit 101 determines whether or not an address is set for the client computer to be connected anew. If not set, the process moves to 301. If set, the process comes to an end. At 301, the host name input unit 100 enters the host name which is an identifier for making it easy for a person to identify the computer to be registered in pairs with the address of the client computer. At 305, the network address is requested by the address requesting unit 102 to the server computer storing the host name entered by 301 in pairs with the network addresses of the entire network. At 306, the request for acquiring the network address sent from the address requesting unit 102 is accepted by the address acquisition request receiving unit 203. At 307, the network address of the client computer accepted by the address acquisition request receiving unit 203 is automatically generated within a range specified by the address range specifying unit 200. At 303, the network address automatically generated by the address generating unit 204 is taken out and stored in the address information memory 202. At 308, the network address automatically generated by the address generating unit 204 is taken out, and it is sent to the client computer using the address sending unit 205. At 309, the network address sent from the address sending unit 205 is received by the address receiving unit 103. At 310, the network address received by the address receiving unit 103 is set in the client computer using the address information setting unit 104. At 311, the network address set in the client computer using the address information setting unit 104 is stored in the address information memory 105.

According to this embodiment as described above, it is possible to automatically generate the network address for the client computer with the server computer, and this eliminates the necessity of manually setting the server computer, which has conventionally been necessary for each connection of a client computer to the network.

It is also possible for the user of a client computer who is unfamiliar with computer system administration to alleviate the system administrating of the user by automatically taking out the system management information from the server computer.

## Claims

1. An address acquiring apparatus comprising:
an address setting determination unit which determines whether setting of a network address is made or not in a client computer , the network address being an identifier on an network and being given to each computer for connecting a computer system to the network;
a host name input unit which enters a host name which is an identifier for making it easy for a person to identify the computer , the host name being registered in pairs with the network address , when said address setting determination unit has determined that such network address has not been set;
an address requesting unit which requests a network address by sending the host name entered by said host name input unit to a server computer storing network addresses in pairs with the host names for an entire network;
an address receiving unit which determines and receives a response of the network address from the server computer;
an address information setting unit which sets the network address received by said address receiving unit and the host name entered by said host name input unit in the computer system; and
an address information memory which stores the network address in pairs with the host name set by said address information setting unit.

2. An address distributing apparatus comprising:
an address acquisition request receiving unit which receives a request for acquiring the network address sent from an address requesting unit which requests a network address by transmitting a host name to a server computer storing network addresses in pairs with the host names for an entire network;
an address range specifying unit which specifies a range of automatic allocation of the network addresses in the server computer;
an address generating unit which automatically generates the network address within the range specified by said address range specifying unit in accordance with information received by said address acquisition request receiving unit;
an address information memory which stores the network address generated by said address generating unit in pairs with the host name received by said address acquisition request receiving unit , in the server computer which manages network addresses of the entire network; and
an address sending unit which takes out the network address automatically generated by said address generating unit and sends the network address to a client computer.

3. A network address setting apparatus comprising the address acquiring apparatus as claimed in Claim 1 and the address distributing apparatus as claimed in Claim 2.
